# EUROPEAN PATENT APPLICATION

(11) **EP 1 865 504 A1**
(43) Date of publication of application: **12.12.2007**
(21) Application number: 07011151.3
(22) Date of filing: 06.06.2007
(51) Int. Cl.: G11B 7/135

(54) **Optical pickup device**

(30) Priority: 08.06.2006 JP 2006160215
(71) Applicant: Sharp Kabushiki Kaisha, Osaka-shi, Osaka 545-8522 (JP)
(72) Inventor: Miyazaki, Osamu, Mihara-shi Hiroshima 729-0412 (JP); Ono, Nobumasa, Hashimoto-shi Wakayama 648-0094 (JP); Kasuga, Kyoji, Kizugawa-shi Kyoto 619-1127 (JP)
(74) Representative: Müller - Hoffmann & Partner

(57) **Abstract**

A light source, an objective lens which concentrates light from the light source onto an information recording surface of an information storage medium, and a spherical aberration correction mechanism provided on a light path between the light source of the objective lens are provided. The spherical aberration correction mechanism includes a piezoelectric element for moving a coupling lens, a photo interrupter which detects whether the coupling lens has been moved to an initial position, and a spherical aberration correction element control circuit which moves the coupling lens, which has been moved to the initial position, to one of first to n-th (n is an integer not less than 2) positions where light is concentrated onto an information recording surface of one of first to n-th layer of the information storage medium, the distances between the initial position to the respective first to n-th positions having been determined in advance. With this, it is possible to provide an optical pickup device which can stably perform focus control and spherical aberration correction, without increase in the number of photo interrupters.

## Description

### FIELD OF THE INVENTION

The present invention relates to an optical pickup device. More specifically, the present invention relates to an optical pickup device which is suitably used in an optical disc device which performs optical recording or reproduction of information to/from an information storage medium such as an optical disc.

### BACKGROUND OF THE INVENTION

There have conventionally been used optical pickup devices which perform recording/reproduction to/from optical discs each having optical transmission layers which are different in thickness, such as DVD (Digital Versatile Disc) and CD (Compact disc) (Japanese Laid-Open Patent Application No. 10-3687; published on January 6, 1998). The optical pickup recited in the patent document corrects spherical aberration occurring on account of difference in thickness of an optical transmission layer, by adjusting the distance between a laser light source and a coupling lens. That is to say, in the aforesaid optical pickup, the distance between the laser light source and the coupling lens is adjusted by moving the laser light source or the coupling lens by moving means. This method of correcting spherical aberration caused by an error in thickness of an optical transmission layer by moving a coupling leans (collimator lens) may also be used for correcting spherical aberration caused by an error in thickness of an optical transmission layer of a multi-layer optical disc.

Various arrangements of the moving means have conventionally been proposed (Japanese Laid-Open Patent Application No. 4-69070; published on March 4, 1992). This patent document recites a drive device using a piezoelectric element. More specifically, the patent document recites a drive device in which one end of the piezoelectric element is fixed to a fixed body whereas the other end of the piezoelectric element is fixed to a friction drive axis, and a movable body is in frictional engagement with the friction drive axis. The piezoelectric element receives a voltage which differentiates the speed of elongation of the piezoelectric element from the speed of contraction thereof, so that the piezoelectric element is periodically deformed. As a result, the movable body which is in frictional engagement with the friction drive axis is moved.

As means for detecting a position of the movable body in the dive device using the aforesaid piezoelectric element, it is possible to use a position detection device using a magnet and hall elements (Japanese Laid-Open Patent Application No. 2005-331399; published on December 2, 2005). The position detection device recited in the patent document is provided with a processing circuit which detects relative positions of a magnet and two hall elements, because the characteristics of the hall elements and magnet significantly changes depending on temperature. To hold the sums of output values of the respective hall elements to be constant, values input to the respective hall elements are controlled and a difference between the output values from the respective hall elements is detected as a position output.

In the meanwhile, optical pickup devices which can correct spherical aberration have conventionally been used (Japanese Laid-Open Patent Application No. 2000-171346; published on June 23, 2000). To correct spherical aberration, the optical pickup device recited in this patent document detects a spherical aberration error signal in the following manner: a hologram provided between a light source and an objective lens is divided into an inner part and an outer part, and the spherical aberration error signal is detected based on a difference between an output signal from an optical detector detecting light diffracted at the inner part of the hologram and an output signal from an optical detector detecting light diffracted at the outer part of the hologram. Based on the spherical aberration error signal, spherical aberration is corrected.

In the optical pickup device capable of detecting spherical aberration, the focusing operation is unstable when focus control is performed to obtain a spherical aberration error signal, in a state that correction of spherical aberration is not properly performed. In this regard, there have conventionally been used optical disc devices (Japanese Laid-Open Patent Application No. 2002-373441; published on December 26, 2002) which stabilize the focusing operation by conducting, before focus control, spherical aberration correction suitable for a recording surface to which the focus control is carried out. This patent document recites an optical pickup having aberration correction means which corrects spherical aberration in a collecting optical system. This aberration correction means sets a degree of spherical aberration correction in advance, before focus control is carried out. The spherical aberration correction is carried out using an aberration correction lens, based on the spherical aberration correction degree thus set.

In the conventional optical pickup device, however, a resonance frequency varies in accordance with an environmental temperature, load, or the like, in case where a piezoelectric element is used as the moving means. On this account, an optimal frequency of a drive signal for the piezoelectric element as the moving means varies in accordance with an environmental temperature, load, or the like. As a result, it may be difficult to move a movable body (e.g. a coupling lens) for a desired distance.

In this regard, it is necessary to detect a position of a movable body in case where a piezoelectric element is used as the moving means. As discussed above, the detection of a position of a movable body can be done using a magnet and hall elements. According to this method, however, two hall elements are required to detect a position of a movable body because the characteristics of hall elements and a magnet significantly vary in accordance with temperature, and a processing circuit for detecting relative positions of two hall elements is also required. This induces increase in the size and costs of the optical pickup device.

In addition to the above, in the conventional optical pickup device, an optimal position of the movable body with a coupling lens must constantly be changed to correct either a thickness error in an optical transmission layer in a single layer in case of a single-layer optical disc or a thickness error in optical transmission layers that are different layers in case of multi-layer optical disc, in order to correct spherical aberration due to a thickness error in an optical transmission layer. To correct the spherical aberration, a spherical aberration error signal is used. It seems that a position of the coupling lens is controllable solely by a spherical aberration error signal, but the spherical aberration error signal is obtained only by conducting focus control after properly executing spherical aberration correction. That is to say, a spherical aberration error signal is obtained in such a manner that focus control is performed after the coupling lens is moved so as to allow for spherical aberration correction suitable for a recording surface to which the focus control is performed. On this account, before the focus control, it is necessary to move the coupling lens to allow for spherical aberration correction suitable for a recording surface to which the focus control is performed. However, the drive device of the coupling lens adopting a piezoelectric element may not be able to move the coupling lens to a desired position, because the moving distance is inconsistent on account of variation in the resonance frequency in accordance with an environmental temperature, load, or the like. The inconsistency in the moving distance becomes more acute as the distance between the reference position (initial position) of the coupling lens and a desired position increases.

To solve this problem, in an optical pickup device which performs recording or reproduction with respect to a double-layer optical disc, for example, the following arrangement may be used: to perform recording or reproduction with respect to an information recording layer which is the first layer or second layer, a first reference position and a second reference position are set for a coupling lens by which variation of spherical aberration caused by a thickness error in an optical transmission layer of the optical information storage medium is corrected, and photo interrupters are provided at the respective positions. In this arrangement, however, the number of photo interrupters increases as the number of the layers of an optical disc increases. Moreover, in addition to the increase in the number of elements for the photo interrupters, the size and costs of the optical pickup device also increase.

### SUMMARY OF THE INVENTION

The present invention was done to solve the problem above, and the objective of the present invention is to provide an optical pickup device which can stably perform focus control and spherical aberration correction, without increase in the number of photo interrupters.

To achieve the objective above, the optical pickup device of the present invention includes: a light source; an objective lens which concentrates a light beam from the light source, onto an information recording surface of an optical information storage medium; and a spherical aberration correction mechanism provided on an optical path between the light source and the objective lens, the spherical aberration correction mechanism including: moving means for moving a coupling lens; initial position detection means for detecting whether the coupling lens has been moved to an initial position; and movement control means for moving the coupling lens, which has been moved to the initial position, to one of first position to n-th (n is an integer not less than 2) positions whose distances from the initial position are predetermined, where the light beam is concentrated at an information recording layer of one of first layer to n-th layer of the optical information storage medium.

According to this arrangement, the coupling lens can be moved to the initial position and the coupling lens having been moved to the initial position can be detected. On this account, the coupling lens can be quickly moved to the initial position. Also, the coupling lens can be moved from the initial position to a desired position (one of the first to n-th positions). A spherical aberration error signal is detected by performing focus control after the coupling lens is moved to either the initial position or the desired position. Spherical aberration is corrected based on the spherical aberration error signal, and hence a recording or reproduction signal is suitably obtained from an optical storage medium.

Additional objects, features, and strengths of the present invention will be made clear by the description below. Further, the advantages of the present invention will be evident from the following explanation in reference to the drawings.

### BRIEF DESCRIPTION OF THE DRAWINGS

Fig. 1 outlines an optical pickup device of an embodiment of the present invention.
Fig. 2 outlines the shape of a beam on a light receiving section of an optical detector in the optical pickup device.
Fig. 3 outlines a spherical aberration correction mechanism in the optical pickup device.
Fig. 4 shows the relationship between a position of a coupling lens and an output signal of a photo interrupter in the spherical aberration correction mechanism.
Fig. 5 is a flowchart showing the steps of spherical aberration correction and focus control in the optical pickup device.
Fig. 6 is a flowchart showing the steps of detecting an initial position of the coupling lens at the time of error detection, in the optical pickup device.
Fig. 7 is a flowchart showing another example of the steps of spherical aberration correction and focus control in the optical pickup device.
Fig. 8 is a flowchart showing a further example of the steps of spherical aberration correction and focus control in the optical pickup device.
Fig. 9 is a graph for illustrating the spherical aberration correction in the optical pickup device.

### DESCRIPTION OF THE EMBODIMENTS

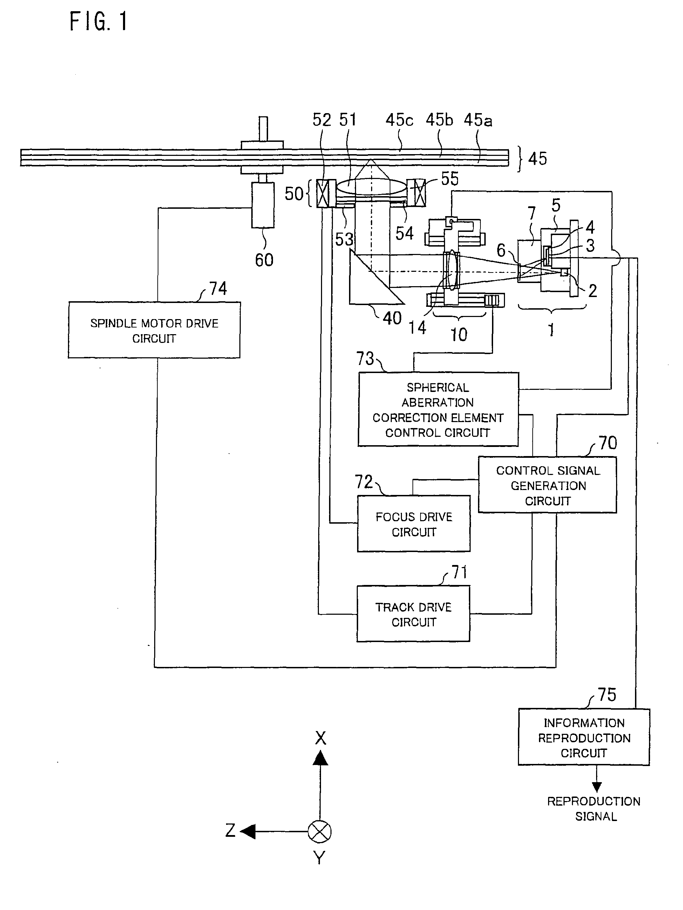

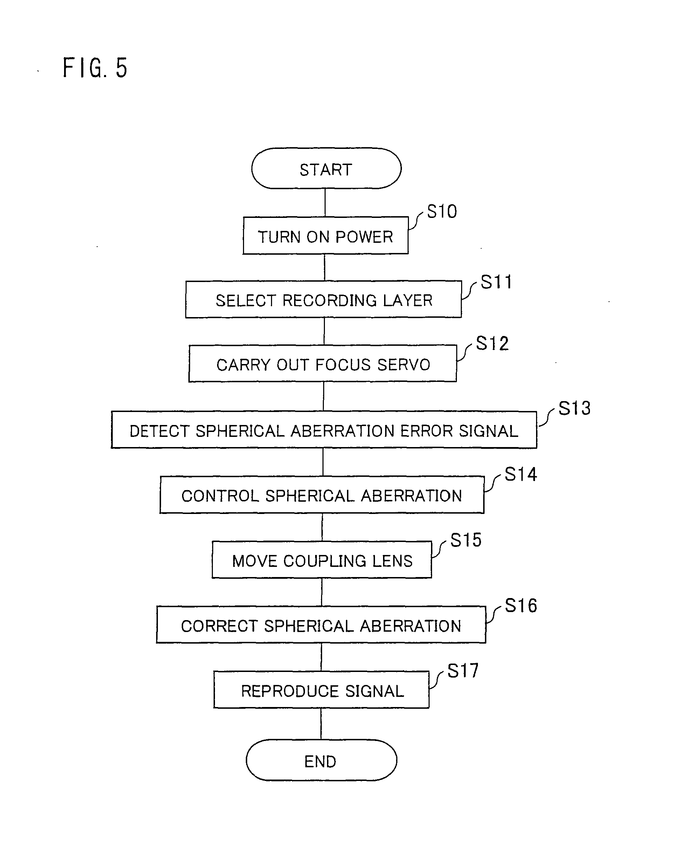

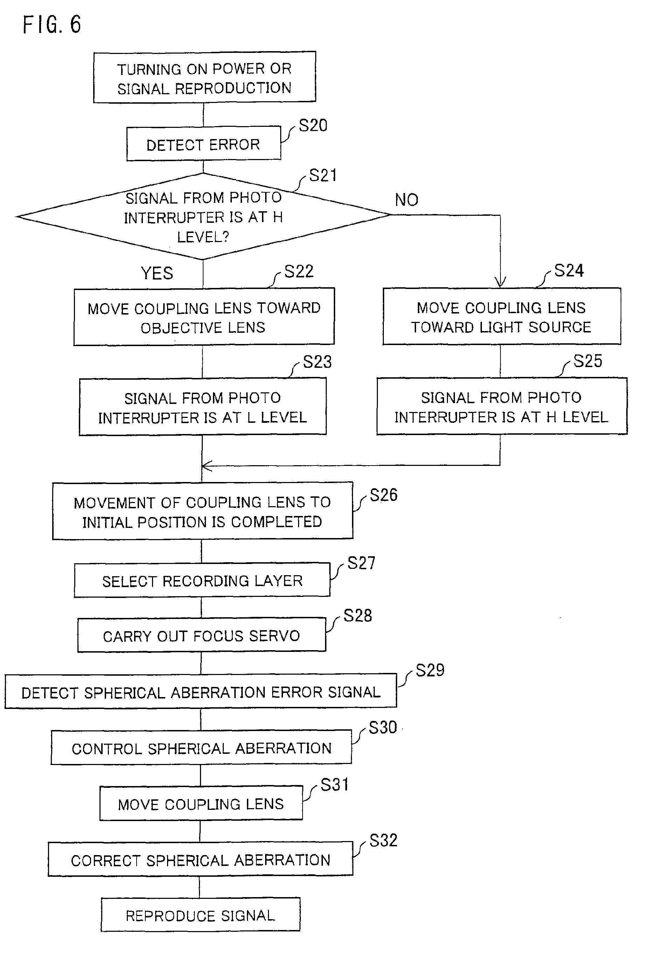

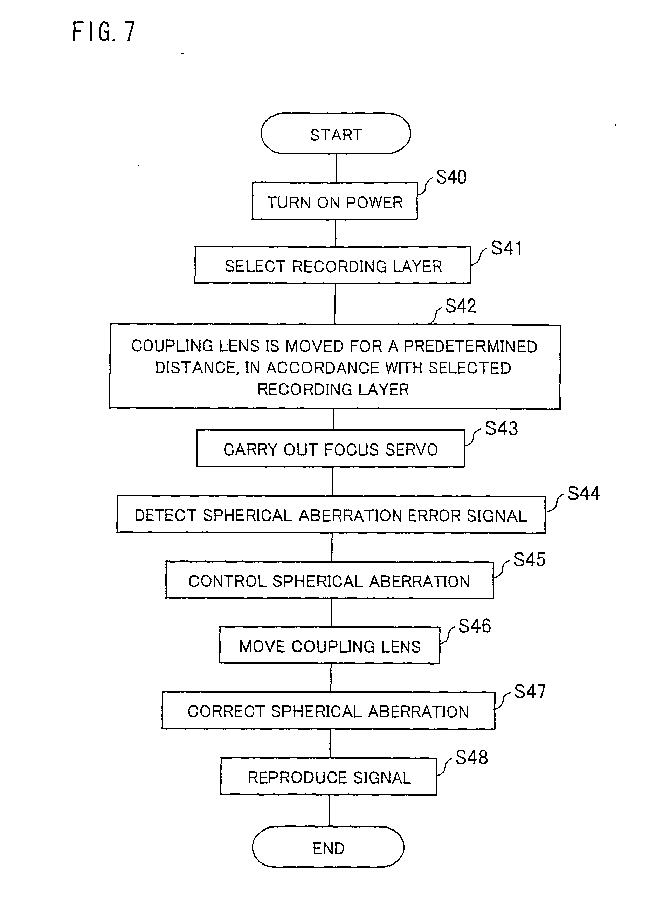

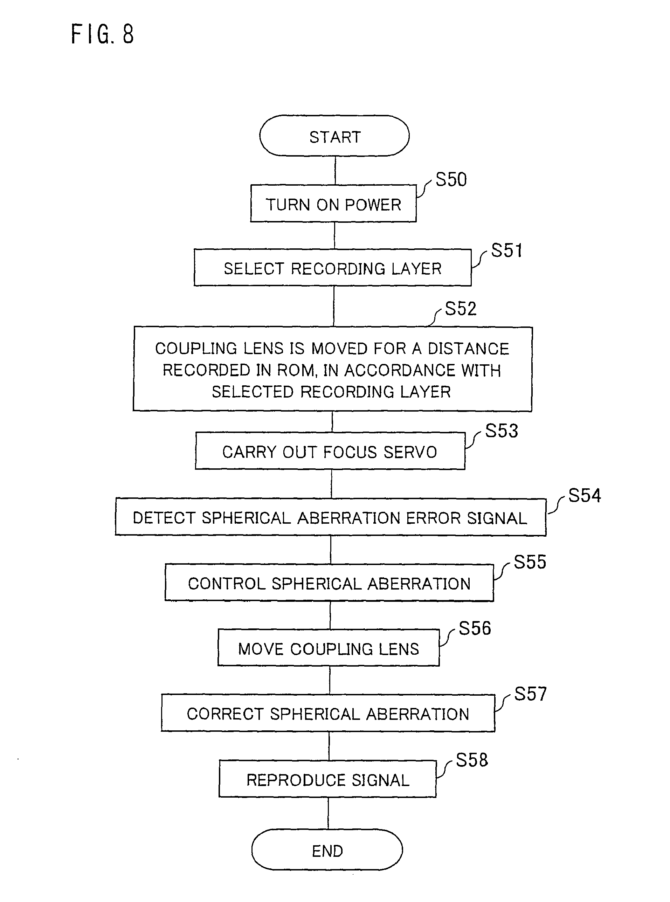

The following will describe an embodiment of the present invention in reference to Figs. 1-8. In the following, an optical pickup device of the present embodiment will be discussed first, and then a method of correcting spherical aberration in the optical pickup device of the present embodiment will be discussed.

### [Optical Pickup Device]

As shown in Fig. 1, the optical pickup device of the present embodiment includes an integrated unit 1, a spherical aberration correction mechanism 10, and an objective lens unit 50.

The integrated unit 1 includes a semiconductor laser 2 (light source), a light receiving section 3, a light detector (detection means) 4, a spacer 5, a polarization hologram 6, and a glass substrate 7.

The objective lens unit 50 includes an objective lens 51, an actuator 52, an aperture stop 53, a quarter wave plate 54, and a holder 55. The objective lens unit 50 faces an optical disc 45 (information storage medium). In the objective lens unit 50, the objective lens 51, the aperture stop 53, the quarter wave plate 54 are fixed to the holder 55, and these members are driven as a unit, when the objective lens 51 focuses or tracks a target track on a first information recording layer 45b (information recording surface) or a second information recording layer 45c (information recording surface) of the optical disc 45. The number of information recording layers in the optical disc 45 is not particularly limited. To simplify, for example, the description of the operation of the optical pickup device, it is assumed that the optical disc 45 has an optical transmission layer 45a and two optical transmission layer, i.e. first and second information recording layers 45b and 45c.

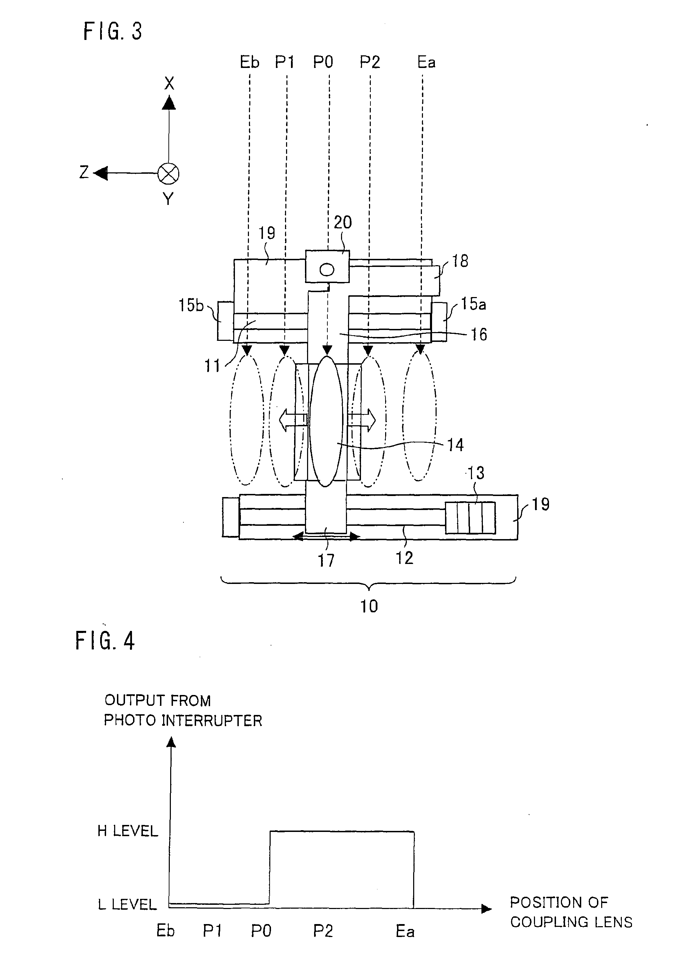

As shown in Figs. 1 and 3, the spherical aberration correction mechanism 10 includes friction drive axes 11 and 12, a piezoelectric element 13 (moving means), a coupling lens 14, stoppers 15a and 15b, a lens holder 16, a catching section 17, a light shielding plate 18 (shielding plate), a base member 19, a photo interrupter 20 (initial position detection means), and a spherical aberration correction element control circuit 73 (movement control means). The spherical aberration correction mechanism 10 is provided between the integrated unit 1 and the objective lens unit. Between the spherical aberration correction mechanism 10 and the objective lens unit 50, a reflecting plate 40 is provided for changing the direction of light. Details of these members will be given below.

The polarization hologram 6 is an element which selectively allows light to pass through or diffracts light in accordance with the polarization direction. In the optical pickup device of the present embodiment, the polarization hologram 6 also functions as light branching means for outgoing light and incoming light. Linearly polarized light in the X axis direction, which is output from the semiconductor laser 2, is converted to circularly polarized light by the quarter wave plate 54, and then passes through the light transmission layer 45a of the double-layer optical disc 45 and converges on either the first information recording layer 45b or the second information recording layer 45c. The circularly-polarized reflected light from the first information recording layer 45b or the second information recording layer 45c is converted in linearly polarized light in the Y axis direction, by the quarter wave plate 54.

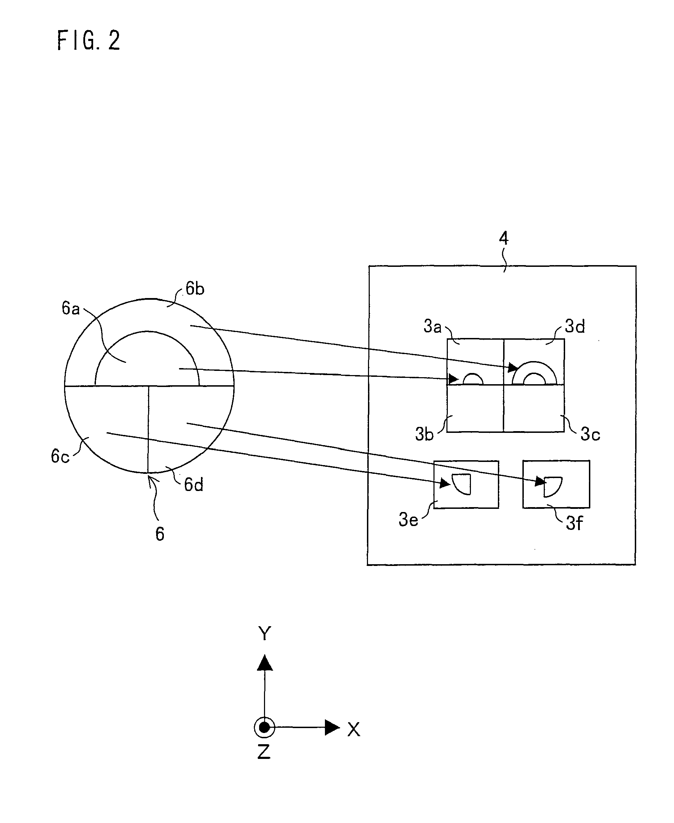

As discussed above, the reflected light from the first information recording layer 45b or the second information recording layer 45c is linearly polarized light which is in parallel to not the X axis but the Y axis. On account of the difference in polarization directions, the linearly polarized light is diffracted by the polarization hologram 6. The following will describe the diffraction of reflected light by the polarization hologram 6, in reference to Fig. 2.

Fig. 2 outlines the polarization hologram 6. As shown in the figure, the polarization hologram 6 is constituted by four regions 6a-6d. The respective regions 6a-6d diffract the reflected light from the optical disc, in different directions. As a result, four light beams are generated by the polarization hologram 6. The light diffracted by the polarization hologram 6 is supplied to the light receiving section 3 of the light detector 4. The light receiving section 3 is constituted by light receiving elements 3a-3f, and each light receiving element outputs an output signal in accordance with an amount of received light. Assuming that the output signals from the light receiving elements 3a-3f are S1-S6, a focus error signal FES, a track error signal TES, a spherical aberration error signal SAS, and an RF signal (reproduction signal) are figured out by the following equations.
(focus error signal FES)=S1-S2
(track error signal TES)=S5-S6
(spherical aberration error signal SAS) = (S3-S4)-k(S2-S1)
(RF signal (reproduction signal)) = S1+S2+S3+S4+S5+S6

In these equations, indicated by k is a coefficient.

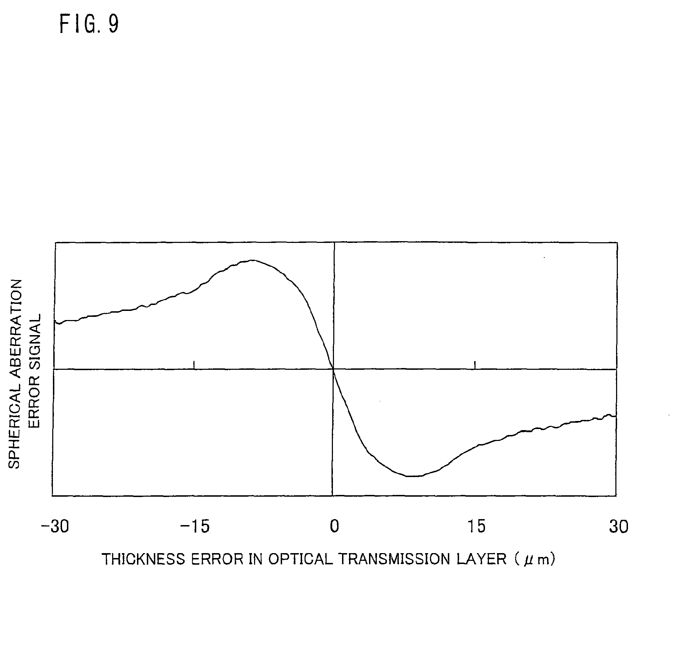

As shown in Fig. 9, the spherical aberration error signal SAS is either positive or negative in accordance with an error in thickness of the optical transmission layer, in case where the coupling lens is not at an optimal position. Spherical aberration correction is carried out so that a position of the coupling lens is moved in parallel to the optical axis in such a manner as to cause a value of the spherical aberration error signal SAS to be zero.

Now, details of the spherical aberration correction mechanism in the optical pickup device of the present embodiment will be given.

As shown in Fig. 3, in the spherical aberration correction mechanism 10 in the optical pickup device of the present embodiment, one end of the piezoelectric element 13 is fixed to the base member 19, whereas the other end of the piezoelectric element 13 is fixed to the friction drive axis 12. The friction drive axis 12 is fixed to the catching section 17. As the piezoelectric element 13 deforms in response to voltage application, the catching section 17 is moved. The catching section 17 is connected to the coupling lens 14, with the result that the coupling lens 14 can move with the catching section 17. The coupling lens 14 is connected to the lens holder 16. Through the intermediary of the lens holder 16, the coupling lens 14 is in frictional engagement with the friction drive axis 11. The respective ends of the friction drive axis 11 are connected with the stoppers 15a and 15b. The lens holder 16 can move in the space between the stoppers 15a and 15b. As shown in Fig. 1, in the optical pickup device of the present embodiment, it is possible to apply a voltage to the piezoelectric element 13 by using the spherical aberration correction element control circuit 73. It is possible to periodically deform the piezoelectric element 13 by applying a voltage to the piezoelectric element 13 in such a way as to differentiate the speed of elongation of the piezoelectric element 13 from the speed of contraction of the piezoelectric element 13. As a result, it is possible to move the coupling lens 14 in the Z axis direction. In the optical pickup device of the present embodiment, therefore, the coupling lens 14 can be moved from an initial position P0 to either a position P1 (first position) or P2 (n-th position (n=2)). The distance from the initial position P0 to the position P1 or P2 is determined in advance. P1 and P2 are preferably set at positions where spherical aberration is minimized when recording or reproduction to/from the first information recording surface 45b and the second information recording surface 45c of the double-layer optical disc 45 is carried out. In the optical pickup device of the present embodiment, P1 is on the objective lens side whereas P2 is on the light source side. In the optical pickup device of the present embodiment, the position of P0 is not particularly limited as long as P0 is positioned between P1 and P2. P0 is preferably positioned at the midway point between P1 and P2. As discussed above, the optical pickup device of the present embodiment assumes that recording and reproduction are carried out with respect to the double-layer optical disc 45. However, the number of information recording layers in the optical disc 45 is not particularly limited. In case where the number of information recording layers in the optical disc 45 is three or more, P1 is positioned to be closest to the objective lens whereas Pn is positioned to be closed to the light source. In this case, the initial position P0 is provided between P1 and Pn. P0 is preferably positioned at the midway point between P1 and P2.

At P0 (initial position) on the base member 19, the photo interrupter 20 is provided. The photo interrupter 20 is constituted by a light emitting element and a light receiving element (not illustrated), and light is fed from the light emitting element to the light receiving element. By checking if the light is blocked or not, it is possible to detect whether a shielding object exists between the light emitting element and the light receiving element. Therefore, in the optical pickup device of the present embodiment, the light emitting element and the light receiving element are provided at P0 and the light shielding plate 18 is provided between these two elements. The lens holder 16 is connected to the light shielding plate 18, and the light shielding plate 18 can move with the coupling lens 14. A position of the coupling lens 14 is detected by changing the light receiving state of the photo interrupter 20 by means of the light shielding plate 18.

The following will give further details of a method of detecting a position of the coupling lens by means of the photo interrupter.

The coupling lens 14 is preferably arranged so as to be able to go over P1 or P2, in consideration of the following factors: manufacturing tolerance and erection tolerance of the members constituting the spherical aberration correction mechanism 10, erection tolerance at the time of mounting the spherical aberration correction mechanism 10 to the optical pickup device, an error in thickness of the optical transmission layer 12a from the surface of the double-layer optical disc 45 to the first information recording surface 45b or the second information recording surface 45c of the optical disc 45, deviation of the coupling lens 14 from the position where the spherical aberration is minimized, due to wavelength variation, and the like. In consideration of the above, the stoppers 15a and 15b are provided so that the coupling lens 14 can move in the space between the stoppers 15a and 15b. The positions where the coupling lens 14 contacts the respective stoppers 15a and 15b are termed Ea and Eb, respectively. To control the coupling lens 14 in such a way as to minimize spherical aberration, the coupling lens 14 moves between Ea and Eb. A position of the coupling lens 14 is controlled based on the detection of the initial position by the photo interrupter 20 and a spherical aberration error signal obtained by the light receiving section 3 of the optical pickup device, in order to correct spherical aberration. The following will discuss a method of controlling a position of the coupling lens 14 based on the detection of the initial position by the photo interrupter 20 and the spherical aberration error signal obtained by the light receiving section 3 of the optical pickup device.

In the optical pickup device of the present embodiment, to place the coupling lens 14 at an optimal position, a position of the coupling lens 14 must constantly be changed to correct either a thickness error of an optical transmission layer in a single layer in case of a single-layer optical disc or a thickness error of an optical transmission layer on account of different layers in case of multi-layer optical disc. For the correction, a spherical aberration error signal is used. It seems that a position of the coupling lens is controllable solely by a spherical aberration error signal, but the spherical aberration error signal is obtained only by conducting focus control after properly executing spherical aberration correction. That is to say, a spherical aberration error signal is obtained in such a manner that focus control is performed after the coupling lens is moved so as to allow for spherical aberration correction suitable for a recording surface to which the focus control is performed. On this account, before the focus control, it is necessary to move the coupling lens to the vicinity of a position where spherical aberration correction is possible, in order to perform spherical aberration correction suitable for a recording surface to which the focus control is carried out. On this occasion, however, the drive device of the coupling lens adopting a piezoelectric element may not be able to move the coupling lens to a desired position, because the moving distance is inconsistent on account of variation in the resonance frequency in accordance with an environmental temperature, load, or the like. As a result, the drive pulse number for driving the piezoelectric element increases. In other words, when the coupling lens is moved to a distant position, the position of the coupling lens after the movement is significantly different from the optimal position of the coupling lens, where spherical aberration correction is possible. For this reason, in the optical pickup device of the present embodiment, the initial position P0 of the coupling lens 14 preferably locates between P1 and P2. More preferably, P0 locates at the midway point between P1 and P2. As a result, in case where the distance between P1 and P2 is short, a spherical aberration error signal can be detected while the coupling lens 14 locates at P0. In cases where the distance between P1 and P2 is long and a spherical aberration error signal is detected more precisely, a spherical aberration error signal is detected after the coupling lens 14 is moved from P0 to P1 or P2. In the optical pickup device of the present embodiment, the coupling lens 14 can be precisely moved to P1 or P2, because distance from P0 to P1 or P2 is short.

The following will discuss the relationship between a position of the coupling lens 14 and an output signal from the photo interrupter 20, in reference to Figs. 3 and 4. The photo interrupter 20 is arranged such that a light emitting element and a light receiving element, which are not illustrated, are positioned so as to face each other and are packaged as a single member. It is therefore possible to notify, in binary manner, whether a shielding object exists between two elements. For example, as shown in Fig. 3, when the coupling lens 4 is at a position which is away from P0 in the positive direction along the Z axis, the light supplied from the light emitting element to the light receiving element is blocked by the light shielding plate 18. No current is therefore generated in the light receiving element, and the output of the photo interrupter 20 in this case is assumed as L level. On the other hand, when the coupling lens 14 is away from P0 in the negative direction along the Z axis, the light supplied from the light emitting element to the light receiving element is not blocked by the light shielding plate 18. A current is therefore generated in the light receiving element, and the output of the photo interrupter 20 in this case is assumed as H level. The light shielding plate 18 is arranged (i) so as not to block the light emitted from the light emitting element to the light receiving element of the photo interrupter 20, when the coupling lens 14 is away from the initial position P0 in the negative direction along the Z axis, and (ii) so as to block the light emitted from the light emitting element to the light receiving element of the photo interrupter 20, when the coupling lens 14 is away from the initial position P0 in the positive direction along the Z axis. Alternatively, the light shielding plate 18 may be arranged (i) so as to block the light emitted from the light emitting element to the light receiving element of the photo interrupter 20, when the coupling lens 14 is away from the initial position P0 in the negative direction along the Z axis, and (ii) so as not to block the light emitted from the light emitting element to the light receiving element of the photo interrupter 20, when the coupling lens 14 is away from the initial position P0 in the positive direction along the Z axis. The aforesaid arrangement makes it possible to specify a relative position of the coupling lens 14 with respect to P0, wherever the coupling lens 14 is positioned. It is therefore possible to know to which direction the coupling lens 14 must be moved, in order to move the coupling lens 14 to P0. As a result, it is possible to quickly return the coupling lens 14 to P0. Non-limiting examples of cases where the coupling lens 14 is moved to P0 include insertion of a new disc, turning on the power, and turning on the power after the system abnormally ends on account of a power failure.

In the meanwhile, if at least one of the L level or H level of an output of the photo interrupter 20 has two types or more, it is uncertain to which direction the coupling lens 14 must be moved to return the same to P0. For example, when at least one of the L level and H level has two types or more, after the coupling lens is moved toward Ea (or Eb) for a sufficient amount of time, the coupling lens is moved toward Eb (or Ea) and the number of rises or falls of the L level and H level is detected. Based on the detected number of rises and falls of the L level and H level, the coupling lens 14 is returned to the initial position P0. In this case a certain amount of time is required to return the coupling lens 14 to the initial position P0. Therefore, as in the case of the optical pickup device of the present embodiment, the coupling lens 14 can be quickly returned to P0 by adopting the arrangement such that a single type of L level is output when the coupling lens 14 moves from the initial position P0 in the positive direction along the Z axis whereas a signal type of H level is output when the coupling lens 14 moves in the negative direction along the Z axis.

Although the photo interrupter is used in the present embodiment, similar effects can be attained when a position sensor whose function is similar to that of the photo interrupter is used. For example, it is possible to adopt a photo reflector which is a reflective photo sensor. This photo reflector is constituted by an LED and a light receiving element which are packaged into a single member, and detects if an object exists by applying light from the LED to the object and detecting the return light from the object by the light receiving element.

The following will describe a method of detecting a spherical aberration error signal and a method of correcting spherical aberration, in regard to the optical pickup device of the present embodiment.

### [First Method of Correcting Spherical Aberration]

In the optical pickup device of the present embodiment, a spherical aberration error signal is detected while the coupling lens 14 is positioned at P0. The following will give details of a method of correction spherical aberration in the optical pickup device of the present embodiment, with reference to Figs. 1, 3, and 5.

In the optical pickup device of the present embodiment, the power is turned on for a start (S10). At this moment, the coupling lens is at the initial position P0. As described above, P0 locates between P1 and P2. In the present case, since P0 is close to P1 and P2 which are positions suitable for a recording surface to which focus control is carried out, a spherical aberration error signal can be detected while the coupling lens is positioned at P0. Therefore, without moving the coupling lens 14 to P1 or P2, a spherical aberration error signal is detected while the coupling lens is positioned at P0.

After the power is turned on, an information recording layer of the optical disc, to which the latter-stage focus control is performed, is selected (S11). In doing so, as shown in Fig. 1, the objective lens 51 is moved by the actuator 52 based on the information supplied from a track drive circuit 71 and a focus drive circuit 72, in such a way as to focus the first information recording layer 45b or the second information recording layer 45c of the optical disc 45.

Subsequently, focus control (focus servo) is carried out (S12). In doing so, laser light emitted from the semiconductor laser 2 passes through the coupling lens 14, and then the laser light is collected by the objective lens 51 and applied to the first information recording layer 45b or the second information recording layer 45c. As discussed above, the coupling lens 14 is positioned at P0 on this occasion. Since P0 is close to P1 and P2, it is possible to focus on the first information recording layer 45b or the second information recording layer 45c.

Subsequently, the reflected light from the first information recording layer 45b or the second information recording layer 45c is detected by the light receiving section 3. Based on the amount of light received by the light receiving section 3, a control signal generation circuit 70 figures out a spherical aberration error signal (S13). How the spherical aberration error signal is figured out is not described here, because it has been explained above.

Then spherical aberration control is carried out (S14). By the spherical aberration control, spherical aberration caused by a thickness error in an optical transmission layer is corrected by controlling a position of the coupling lens. In the present invention, a spherical aberration error signal is used for the control of a position of the coupling lens. The spherical aberration error signal is positive or negative in accordance with a thickness error in an optical transmission layer, in case where a position of the coupling lens is not optimal. A position of the coupling lens is moved along the optical axis in such a way as to cause the value of the spherical aberration error signal to be zero, so that spherical aberration correction is achieved.

Subsequently, the coupling lens is moved so that spherical aberration is corrected (S15 and S16). In doing so, as shown in Fig. 1, based on the spherical aberration error signal which has been figured out, the control signal generation circuit 70 determines a position of the coupling lens 14 for correcting the spherical aberration and also determines a voltage to be applied to the piezoelectric element 13 in order to move the coupling lens to the position thus determined. Thereafter, the spherical aberration correction element control circuit 73 applies the voltage to the piezoelectric element 13. In accordance with the voltage application to the piezoelectric element 13, the piezoelectric element is deformed so that the coupling lens 14 is moved to the position optimal for correcting the spherical aberration.

Subsequently, after the coupling lens 14 is moved, information recorded on the first information recording layer 45b or the second information recording layer 45c of the optical disc 45 is reproduced (S17). In doing so, the reflected light from the first information recording layer 45b or the second information recording layer 45c of the optical disc 45 is detected by the light receiving section 3. The information detected by the light receiving section 3 is supplied to an information reproduction circuit 75 and then reproduced. In this manner, information recorded on the first information recording layer 45b or the second information recording layer 45c of the optical disc 45 is reproduced, with spherical aberration having been corrected.

As discussed above, in the optical pickup device of the present embodiment, a spherical aberration error signal is detected while the coupling lens 14 is positioned at P0. On this account, the optical pickup device of the present embodiment performs very simple steps from the turning on the power to signal reproduction. As a result, spherical aberration is quickly corrected.

### [Second Method of Correcting Spherical Aberration]

In the optical pickup device of the present embodiment, after the coupling lens 14 is returned to the initial position P0, a spherical aberration error signal is detected while the coupling lens 14 is positioned at P0. The following will further give details of a method of correcting spherical aberration in the optical pickup device of the present embodiment, with reference to Figs. 1, 3, and 6.

In the optical pickup device of the present embodiment, for a start, it is determined if the optical pickup device is in an error state (S20). Non-limiting examples of the error state include insertion of a new disc, turning on the power, and turning on the power after the system abnormally ends on account of a power failure. In the error state, the coupling lens 14 is not positioned at P0.

Then the level of an output signal of the photo interrupter 20, which is either H level or L level, is detected (S21). With this, a relative position of the coupling lens 14 with respect to the photo interrupter 20 is detected. For example, when the output signal is at H level, the coupling lens 14 is positioned on the P2 side. On the other hand, when the output signal is at L level, the coupling lens 14 is on the P1 side (see Figs. 3 and 4, for example).

When the output signal is at H level, the coupling lens 14 is moved toward P1 (toward the objective lens) (S22). The movement of the coupling lens 14 is stopped when the photo interrupter 20 detects L level (S23). As a result, the coupling lens 14 is positioned at P0 (S26). In the meanwhile, when the output signal is at L level, the coupling lens 14 is moved toward P2 (toward the light source) (S24). The movement of the coupling lens 14 is stopped when the photo interrupter 20 detects H level (S25). As a result, the coupling lens 14 is positioned at P0 (S26). In the optical pickup device of the present embodiment, it is possible to detect a relative position of the coupling lens 14 with respect to the photo interrupter 20, by means of an output signal of the photo interrupter 20. On this account, the coupling lens 14 can be returned to the initial position P0 by moving the coupling lens 14 once. It is therefore possible to reduce a time required for returning the coupling lens 14 to the initial position P0. P0 locates between P1 and P2. In the present case, since the initial position P0 is close to the positions P1 and P2 which are suitable for the recording surface to which focus control is carried out, the coupling lens 14 positioned at P0 can detect a spherical aberration error signal. In this way, in the optical pickup device of the present embodiment, the coupling lens positioned at P0 detects a spherical aberration error signal, without being moved to P1 or P2.

Subsequently, an information recording layer of the optical disc, to which the latter-stage focus control is carried out, is selected (S27). In doing so, as shown in Fig. 1, the actuator 52 moves the objective lens 51 based on information supplied from the track drive circuit 71 and the focus drive circuit 72, in such a way as to cause the objective lens 51 to focus either the first information recording layer 45b or the second information recording layer 45c of the optical disc 45.

Then focus control (focus servo) is carried out (S28). In doing so, laser light emitted from the semiconductor laser 2 passes through the coupling lens 14, and then the laser light is collected by the objective lens 51 and applied to the first information recording layer 45b or the second information recording layer 45c. As discussed above, the coupling lens 14 is positioned at P0. Since P0 is close to P1 and P2, the coupling lens 14 can focus the first information recording layer 45b or the second information recording layer 45c.

Thereafter, reflected light from the first information recording layer 45b or the second information recording layer 45c is detected by the light receiving section 3. Based on the amount of light received by the light receiving section 3, the control signal generation circuit 70 figures out a spherical aberration error signal (S29). How the spherical aberration error signal is figured out is not described here, because it has been explained above.

Then spherical aberration control is performed (S30). The spherical aberration is a method of correcting, by controlling a position of the coupling lens, spherical aberration caused by a thickness error in an optical transmission layer. In the present invention, a spherical aberration error signal is particularly used for controlling a position of the coupling lens. A spherical aberration signal is positive or negative in accordance with a thickness error in the optical transmission layer, in case where the coupling lens is not at an optimal position. A position of the coupling lens is moved along the optical axis in such a way as to cause the value of the spherical aberration error signal to be zero, so that spherical aberration correction is achieved.

Subsequently, the coupling lens is moved so that spherical aberration is corrected (S31 and S32). In doing so, as shown in Fig. 1, in the control signal generation circuit 70, a position of the coupling lens 14 is determined based on the calculated spherical aberration error signal in order to correct the spherical aberration, and a voltage to be applied to the piezoelectric element 13 in order to move the coupling lens 14 to the position thus determined is also determined. Then the spherical aberration correction element control circuit 73 applies the voltage to the piezoelectric element 13. In accordance with the applied voltage, the piezoelectric element 13 deforms so that the coupling lens 14 is moved to the position optimal to the correction of the spherical aberration.

Subsequently, after the coupling lens 14 is moved, information is reproduced from the first information recording layer 45b or the second information recording layer 45c of the optical disc 45. In doing so, reflected light from the first information recording layer 45b or the second information recording layer 45c of the optical disc 45 is detected by the light receiving section 3. The information detected by the light receiving section 3 is supplied to the information reproduction circuit 75 and then reproduced. In this way, information recorded on the first information recording layer 45b or the second information recording layer 45c of the optical disc 45 is reproduced with spherical aberration having been corrected.

As discussed above, in the optical pickup device of the present embodiment, it is possible to quickly return the coupling lens 14 to the initial position P0, wherever the coupling lens 14 is positioned. Then a spherical aberration error signal is detected so that spherical aberration is quickly corrected.

### [Third Method of Correcting Spherical Aberration]

In the optical pickup device of the present embodiment, after the coupling lens 14 is moved to P1 or P2, a spherical aberration error signal is detected while the coupling lens 14 is positioned at P1 or P2. The following will give details of a method of correcting spherical aberration in the optical pickup device of the present embodiment, in reference to Figs. 1, 3, and 7.

In the optical pickup device of the present embodiment, power is supplied to the optical pickup device for a start (S40). At this time, the coupling lens is positioned at the initial position P0. As described above, the initial position P0 locates between P1 and P2. Since in this case the initial position P0 is close to P1 and P2 which are suitable for the recording surface to which focus control is carried out, the coupling lens 14 can be quickly moved to P1 or P2. Therefore, in the optical pickup device of the present embodiment, a spherical aberration error signal is detected after the coupling lens 14 is moved to P1 or P2.

After turning on the power, an information recording layer of the optical disc, to which the latter-stage focus control is performed, is selected (S41). In doing so, as shown in Fig. 1, the actuator 52 moves the objective lens 51 based on information from the track drive circuit 71 and the focus drive circuit 72, in such a manner as to cause the objective lens 51 to focus either the first information recording layer 45b or the second information recording layer 45c of the optical disc 45.

Subsequently, the coupling lens 14 is moved to P1 or P2 (S42). For example, in case where information is recorded onto or reproduced from the first information recording layer 45b of the optical disc 45, the coupling lens 14 is moved to P1. On the other hand, in case where information is recorded onto or reproduced from the second information recording layer 45c of the optical disc 45, the coupling lens 14 is moved to P2. The information in regard to the relative position of P0 with respect to P1 and P2 and the information in regard to a voltage applied to the piezoelectric element 13 in order to move the coupling lens 14 to P1 or P2 are stored in the control signal generation circuit 70. Based on these sets of information, the spherical aberration correction element control circuit 73 applies a voltage to the piezoelectric element 13. In accordance with the applied voltage, the piezoelectric element deforms, with the result that the coupling lens 14 is moved to P1 or P2.

Subsequently, focus control (focus servo) is performed (S43). In doing so, laser light emitted from the semiconductor laser 2 passes through the coupling lens 14, and then the laser light is collected by the objective lens 51 and applied to the first information recording layer 45b or the second information recording layer 45c. As discussed above, since the coupling lens 14 on this occasion is positioned at P1 or P2, the coupling lens 14 can focus the first information recording layer 45b or the second information recording layer 45c.

Thereafter, reflected light from the first information recording layer 45b or the second information recording layer 45c is detected by the light receiving section 3. Based on the amount of light received by the light receiving section 3, the control signal generation circuit 70 figures out a spherical aberration error signal (S44). How the spherical aberration error signal is figured out is not described here, because it has been explained above.

Spherical aberration control is then carried out (S45). The spherical aberration is a method of correcting, by controlling a position of the coupling lens, spherical aberration caused by a thickness error in an optical transmission layer. In the present invention, a spherical aberration error signal is particularly used for controlling a position of the coupling lens. A spherical aberration signal is positive or negative in accordance with a thickness error in the optical transmission layer, in case where the coupling lens is not at an optimal position. A position of the coupling lens is moved along the optical axis in such a way as to cause the value of the spherical aberration error signal to be zero, so that spherical aberration correction is achieved.

Subsequently, the coupling lens is moved so that spherical aberration is corrected (S46 and S47). In doing so, as shown in Fig. 1, in the control signal generation circuit 70, a position of the coupling lens 14 is determined based on the calculated spherical aberration error signal in order to correct the spherical aberration, and a voltage to be applied to the piezoelectric element 13 in order to move the coupling lens 14 to the position thus determined is also determined. Then the spherical aberration correction element control circuit 73 applies the voltage to the piezoelectric element 13. In accordance with the applied voltage, the piezoelectric element 13 deforms so that the coupling lens 14 is moved to the position optimal to the correction of the spherical aberration.

Subsequently, after the coupling lens 14 is moved, information is reproduced from the first information recording layer 45b or the second information recording layer 45c of the optical disc 45 (S48). In doing so, reflected light from the first information recording layer 45b or the second information recording layer 45c of the optical disc 45 is detected by the light receiving section 3. The information detected by the light receiving section 3 is supplied to the information reproduction circuit 75 and then reproduced. In this way, information recorded on the first information recording layer 45b or the second information recording layer 45c of the optical disc 45 is reproduced with spherical aberration having been corrected.

As discussed above, in the optical pickup device of the present embodiment, when the distance from P0 to P1 or P2 is particularly long, a spherical aberration error signal is detected after the coupling lens 14 is moved from P0 to P1 or P2. With this, it is possible to quickly correct spherical aberration.

### [Fourth Method of Correcting Spherical Aberration]

In the optical pickup device of the present embodiment, after the coupling lens 14 is moved to P1 or P2, a spherical aberration error signal is detected while the coupling lens 14 is positioned at P1 or P2. The following will give details of a method of correcting spherical aberration in the optical pickup device of the present embodiment, with reference to Figs. 1, 3, and 8. Arrangements other than those described below are identical with those discussed in the third method of correcting spherical aberration above.

In the optical pickup device of the present embodiment, the coupling lens 14 is moved from P0 to P1 or P2 in S42 discussed in the third method above, based on information in regard of distances from P0 to P1 and P2, which is stored in the storage section (storage means). As discussed above, the optical pickup device of the present embodiment has been described on the premise that information is recorded onto or reproduced from the double-layer optical disc 45. However, the number of information recording layers in the optical disc 45 is not particularly limited. In case where the number (n) of information recording layers in the optical disc 45 is three or more, the storage section stores information regarding distances from P0 to P1-Pn.

It is not particularly limited where the storage section is provided. For example, the storage section may be provided in the control signal generation circuit 70. Non-limiting specific examples of the storage section include an EEPROM (Electrically Erasable Programmable ROM) in which data can be electrically rewritten by using a device called ROM writer, and a UV-EPROM in which data can be rewritten by means of ultraviolet light. The information stored in the storage section is supplied to the spherical aberration correction element control circuit 73. Based on the information, the spherical aberration correction element control circuit 73 applies a voltage to the piezoelectric element 13. In accordance with the applied voltage, the piezoelectric element deforms so that the coupling lens 14 is moved to P1 or P2 (S52). Thereafter, spherical aberration is corrected in the steps S53-S58. Since these steps are identical with the steps S43-S48, details thereof are not given here.

According to the arrangement above, since information in regard to each optical pickup device is stored in the storage section, it is possible to properly correct spherical aberration caused by a manufacturing error in each optical pickup device.

As discussed above, the optical pickup device of the present invention is arranged such that, a spherical aberration correction mechanism includes: moving means for moving a coupling lens; initial position detection means for detecting whether the coupling lens has been moved to the initial position; and movement control means for moving the coupling lens, which has been moved to the initial position, to one of first position to n-th (n is an integer not less than 2) position where the light beam is concentrated at an information recording layer of one of first layer to n-th layer of the optical information storage medium, respective distances between the initial position to the first to n-th positions having been determined in advance.

It is therefore possible to perform stable focus control and spherical aberration correction without increasing the number of photo interrupters.

The present invention may be illustrated as below.

The optical pickup device of the present invention is preferably arranged such that the initial position detection means includes a photo interrupter and a shielding plate which moves with the coupling lens and blocks a light signal from the photo interrupter, the photo interrupter is provided at the initial position, and a blocking state of the light signal by the shielding plate is different between a case where the coupling lens is positioned between the objective lens and the initial position and a case where the coupling lens is positioned between the light source and the initial position.

According to this arrangement, it is possible to detect a position of the coupling lens by using a single photo interrupter. In other words, a relative position of the coupling lens with respect to the initial position can be detected by detecting how the photo interrupter blocks a light signal. The coupling lens is moved in accordance with the detection result so that the coupling lens is quickly moved to the initial position.

The optical pickup device of the present invention is preferably arranged such that the initial position is between the first position and the n-th position.

According to this arrangement, the initial position locates between the first position and the n-th position so that the distances from the initial position to the first to n-th positions are short. Since the moving distance of the coupling lens to each position is short, the coupling lens can precisely move to each position. In particular, in case where the coupling lens is moved by moving means (e.g. piezoelectric element) which has a problem that the precision of the movement decreases as the moving distance increases, the arrangement above allows the coupling lens to precisely move to the respective positions. Also, since focus control is carried out after the coupling lens is moved to one of the first to n-th positions, a spherical aberration error signal is detected under suitable conditions. Since spherical aberration is corrected based on the spherical aberration error signal, a recording or reproduction signal is suitably obtained from an optical storage medium.

The optical pickup device of the present invention is preferably arranged such that the initial position locates at a midway point between the first position and the n-th position.

According to this arrangement, since the initial position is at the midway point between the first position and the n-th position, the distances from the initial position to the first to n-th positions are short. Also, according to he arrangement above, the longest distance among the distances from the initial position to the first to n-th positions is minimized. Therefore, according to the arrangement above, the coupling lens can be precisely moved to each position as compared to the arrangement in which the initial position locates between the first position and the n-th position.

The optical pickup device of the present invention is preferably arranged such that the moving means includes a piezoelectric element.

According to the arrangement above, the coupling lens can be moved by applying a voltage to the piezoelectric element.

The optical pickup device of the present invention preferably includes storage means for storing information in regard to respective distances from the initial position to the first to n-th positions.

In the optical pickup device of the present invention, the storage means is preferably ROM or PROM. The PROM is preferably EEPROM in which data can be electrically rewritten or UV-EPROM in which data can be rewritten by means of ultraviolet light.

According to the arrangement above, it is possible to store, in the storage means, information in regard to distances from the initial position to the first to n-th positions, for each optical pickup device. Based on this information, it is possible in each optical pickup device to move the coupling lens from the initial position to each of the first to n-th positions. After moving the coupling lens to each position, focus control is performed. As a result, it is possible to detect a spherical aberration error signal under suitable conditions. Since spherical aberration is corrected based on the aforesaid spherical aberration error signal, it is possible to suitably obtain a recording or reproduction signal from an optical storage medium.

The optical pickup device of the present invention is preferably arranged such that, while the coupling lens is positioned at the initial position, a spherical aberration error signal is detected by performing focus control with respect to a target layer, of the optical information storage medium, to which spherical aberration correction is performed, and based on the spherical aberration error signal, the spherical aberration correction is carried out.

According to this arrangement, it is possible to detect a spherical aberration error signal by performing focus control while the coupling lens is not moved from the initial position. Spherical aberration can therefore be quickly corrected.

The optical pickup device of the present invention is preferably arranged such that, while the coupling lens is positioned at one of the first position to the n-th position, a spherical aberration error signal is detected by performing focus control with respect to a target layer, of the optical information storage medium, to which spherical aberration correction is performed, and based on the spherical aberration error signal, the spherical aberration correction is carried out.

According to this arrangement, a spherical aberration error signal is detected by performing focus control while the coupling lens is positioned at one of the first to n-th positions. Also, according to the arrangement above, it is possible to precisely detect a spherical aberration error signal as compared to the case where a spherical aberration error signal is detected while the coupling lens is positioned at the initial position. On this account, it is possible to precisely correct spherical aberration.

The optical pickup device of the present invention is arranged such that the spherical aberration correction mechanism moves the coupling lens along an optical axis so as to correct variation in spherical aberration, which variation is caused by a thickness error in an optical transmission layer of the optical information storage medium.

Also, the optical pickup device of the present invention is preferably arranged such that the initial position detection means detects whether the coupling lens has been moved to the initial position, when the coupling lens is moved by the moving means.

Also, the optical pickup device of the present invention preferably includes detection means for detecting a spherical aberration error signal corresponding to the spherical aberration, by detecting reflected light from the information recording surface.

The optical pickup device of the present invention, which includes: a light source; an objective lens which concentrates a light beam from the light source, onto an information recording surface of an optical information storage medium; a spherical aberration correction mechanism which corrects variation in spherical aberration caused by a thickness error in an optical transmission layer of the optical information storage medium, by moving a coupling lens on an optical path between the light source and the objective lens; and detection means for detecting a spherical aberration error signal corresponding to the spherical aberration, by detecting reflected light from the information recording surface, may be arranged such that the spherical aberration correction mechanism includes: moving means for moving a coupling lens; initial position detection means for detecting whether the coupling lens has been moved to an initial position; and movement control means for moving the coupling lens, which has been moved to the initial position, to one of first position to n-th (n is an integer not less than 2) position where the light beam is concentrated at an information recording layer of one of first layer to n-th layer of the optical information storage medium, respective distances between the initial position to the first to n-th positions having been determined in advance.

As described above, according to the present invention, the coupling lens can be quickly moved to the initial position, and it is possible to detect the coupling lens having been moved to the initial position. It is therefore possible to stably perform focus control and spherical aberration correction, without increasing the number of photo interrupters. The present invention can therefore be used for fields of optical pickup devices and manufacture thereof.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

## Claims

1. An optical pickup device comprising:
a light source (2);
an objective lens (51) which concentrates a light beam from the light source (2), onto an information recording surface of an optical information storage medium (45); and
a spherical aberration correction mechanism (10) provided on an optical path between the light source (2) and the objective lens (51),
the spherical aberration correction mechanism (10) including:
moving means for moving a coupling lens (14);
initial position detection means for detecting whether the coupling lens (14) has been moved to an initial position; and
movement control means for moving the coupling lens (14), which has been moved to the initial position, to one of first position to n-th (n is an integer not less than 2) position where the light beam is concentrated at an information recording layer of one of first layer to n-th layer of the optical information storage medium (45), respective distances between the initial position to the first to n-th positions having been determined in advance.

2. The optical pickup device as defined in claim 1,
wherein, the initial position detection means includes a photo interrupter (20) and a shielding plate (18) which moves with the coupling lens (14) and blocks a light signal from the photo interrupter (20),
the photo interrupter (20) is provided at the initial position, and
a blocking state of the light signal by the shielding plate (18) is different between a case where the coupling lens (14) is positioned between the objective lens (51) and the initial position and a case where the coupling lens (14) is positioned between the light source (2) and the initial position.

3. The optical pickup device as defined in claim 1 or 2,
wherein, the initial position is between the first position and the n-th position.

4. The optical pickup device as defined in claim 3,
wherein, the initial position locates at a midway point between the first position and the n-th position.

5. The optical pickup device as defined in claim 1,
wherein, the moving means includes a piezoelectric element (13).

6. The optical pickup device as defined in claim 1, further comprising storage means for storing information in regard to respective distances from the initial position to the first to n-th positions.

7. The optical pickup device as defined in claim 6,
wherein, the storage means is ROM or PROM.

8. The optical pickup device as defined in claim 1,
wherein, while the coupling lens (14) is positioned at the initial position, a spherical aberration error signal is detected by performing focus control with respect to a target layer, of the optical information storage medium (45), to which spherical aberration correction is performed, and
based on the spherical aberration error signal, the spherical aberration correction is carried out.

9. The optical pickup device as defined in claim 1,
wherein, while the coupling lens (14) is positioned at one of the first position to the n-th position, a spherical aberration error signal is detected by performing focus control with respect to a target layer, of the optical information storage medium (45), to which spherical aberration correction is performed, and
based on the spherical aberration error signal, the spherical aberration correction is carried out.

10. The optical pickup device as defined in claim 1,
wherein, the spherical aberration correction mechanism (10) moves the coupling lens (14) along an optical axis so as to correct variation in spherical aberration, which variation is caused by a thickness error in an optical transmission layer of the optical information storage medium (45).

11. The optical pickup device as defined in claim 1,
wherein, the initial position detection means detects whether the coupling lens (14) has been moved to the initial position, when the coupling lens (14) is moved by the moving means.

12. The optical pickup device as defined in claim 1, further comprising detection means for detecting a spherical aberration error signal corresponding to the spherical aberration, by detecting reflected light from the information recording surface.
